# EUROPÄISCHE PATENTSCHRIFT

(11) **EP 3 354 386 B1**
(45) Veröffentlichungstag und Bekanntmachung des Hinweises auf die Patenterteilung: **13.01.2021**
(21) Anmeldenummer: 17000141.6
(22) Anmeldetag: 25.01.2017
(51) Int. Cl.: B23C 3/12, B27D 5/00, B27G 13/00, B23C 5/00, B23Q 35/04

(54) **WERKZEUGKOPF UND WERKZEUGSYSTEM MIT EINEM WERKZEUGKOPF**
TOOL HEAD, AND TOOL SYSTEM WITH A TOOL HEAD
MANDRIN ET SYSTÈME D'OUTIL COMPRENANT UN MANDRIN

(43) Veröffentlichungstag der Anmeldung: 01.08.2018
(73) Patentinhaber: Ledermann GmbH & Co. KG, 72160 Horb a. N. (DE); HOMAG Kantentechnik GmbH, 32657 Lemgo (DE)
(72) Erfinder: Sitzler, Benjamin, 72172 Sulz am Neckar (DE); Nope, Thomas, 32689 Kalletal (DE)
(74) Vertreter: Zurhorst, Stefan

(56) Entgegenhaltungen:
- EP-A1- 2 011 614
- EP-A1- 2 363 259
- EP-A1- 2 886 272
- EP-A2- 2 492 071
- DE-A1-102013 010 359

## Beschreibung

Die Erfindung betrifft einen Werkzeugkopf mit den Merkmalen nach dem Oberbegriff des Anspruchs 1. Ein solcher Werkzeugkopf ist aus dem Dokument DE 1020 1301 359 A1 bekannt.

Werkstücke verschiedener Art erfordern eine Kantenbearbeitung, wozu drehend antreibbare Werkzeugköpfe mit umfangsseitig angeordneten Schneiden eingesetzt werden. Häufig sind am gleichen Werkstück verschiedene Arten der Kantenbearbeitung bzw. unterschiedliche Bearbeitungsschritte sequenziell durchzuführen. So kann es beispielsweise erforderlich sein, eine Werkstückkante anzufasen und eine andere Kante des gleichen Werkstückes mit einem Radius zu versehen. Vergleichbar dazu kommt auch eine Bearbeitung der gleichen Werkstückkante in zwei unterschiedlichen Bearbeitungsschritten mit Vor- und Feinbearbeitung in Betracht. Derartige Bearbeitungsschritte können auf Durchlaufbearbeitungsmaschinen ausgeführt werden, in denen die zu bearbeitenden Werkstücke an Fräsaggregaten mit geeigneten Werkzeugköpfen vorbeigeführt werden. Alternativ können entsprechende Werkzeugköpfe an der Frässpindel eines Bearbeitungszentrums angebracht werden, womit dann die Kontur des Werkstückes abgefahren und eine Formfräsbearbeitung durchgeführt wird.

Für die verschiedenen Schritte der Kantenbearbeitung können jeweils eigene, unterschiedliche Werkzeugköpfe zum Einsatz kommen, was jedoch eine aufwendige Auswechslung und Neujustierung erfordert. Alternativ können Werkzeugköpfe mit zwei verschiedenen Schneidensätzen zum Einsatz kommen, wobei die beiden verschiedenen Schneidensätze des gleichen Werkzeugkopfes bedarfsabhängig zum Eingriff mit der Werkstückkante gebracht werden. Ein derartiger Werkzeugkopf ist beispielsweise aus der EP 1 044 772 A2 bekannt und umfasst einen ersten Werkzeugabschnitt mit einem Satz von über den Umfang verteilten ersten Schneiden sowie einen zweiten Werkzeugabschnitt mit einem Satz von über den Umfang verteilten zweiten Schneiden. Die zweiten Schneiden sind in Umfangsrichtung gesehen zwischen den ersten Schneiden positioniert. Der zweite Werkzeugabschnitt ist relativ zum ersten Werkzeugabschnitt in Richtung der Längsachse zwischen einer passiven Position und einer aktiven Position hin und her verfahrbar. In der passiven Position sind die zweiten Schneiden gegenüber den ersten Schneiden axial zurückgezogen, während sie in der aktiven Position zwischen den ersten Schneiden hindurch axial hervorstehen und auf diese Weise zum Eingriff mit der Werkstückkante gebracht werden können.

Sowohl in der aktiven als auch in der passiven Position wird der zweite Werkzeugabschnitt hydraulisch fixiert. Für den Verstellvorgang wird die hydraulische Fixierung gelöst, wonach dann eine pneumatische Verstellvorrichtung zum Einsatz kommt. Die Kombination aus hydraulischer Fixierung und pneumatischer Verstellung ist technisch aufwendig und erfordert auch einen entsprechenden Bauraum. Es wird zwar eine Nutzung als Einwechselaggregat in Betracht gezogen, was jedoch mit Blick auf die Komplexität des Systems nur eingeschränkt möglich sein dürfte.

Vergleichbare Werkzeugköpfe sind noch aus DE 10 2013 010 359 A1, EP 2 011 614 A1, EP 2 492 071 A2, EP 2 363 259 A und EP 2 886 272 A1 bekannt.

Der Erfindung liegt die Aufgabe zugrunde, einen gattungsgemäßen Werkzeugkopf derart weiterzubilden, dass Verstellung und Fixierung deutlich vereinfacht sind.

Diese Aufgabe wird durch einen Werkzeugkopf mit den Merkmalen des Anspruchs 1 gelöst.

Der Erfindung liegt des Weiteren die Aufgabe zugrunde, ein Werkzeugsystem anzugeben, mittels dessen in vereinfachter Weise zwischen dem Einsatz zweier verschiedener Schneidensätze hin und her geschaltet werden kann.

Diese Aufgabe wird durch ein Werkzeugsystem mit den Merkmalen des Anspruchs 8 gelöst.

Nach der Erfindung ist vorgesehen, dass der Werkzeugkopf eine Druckschaltmechanik zum Hin- und Herverfahren des zweiten Werkzeugabschnitts zwischen der passiven Position und der aktiven Position aufweist. Eine Druckschaltmechanik ist per Definition eine Mechanik, die infolge eines ersten Druckimpulses einen ersten Schaltzustand und infolge eines weiteren Druckimpulses einen zweiten Schaltzustand einnimmt. Mit jedem weiteren Druckimpuls wird abwechselnd zwischen den beiden Schaltzuständen bzw. Schaltpositionen hin und her geschaltet. Nach dem Ende eines jeden nur kurzen Schaltimpulses erfolgt eine selbsttätige Verriegelung in der jeweils ausgewählten Schaltposition. Bezogen auf den erfindungsgemäßen Werkzeugkopf bedeutet dies, dass für das Umschalten zwischen zwei verschiedenen zum Einsatz kommenden Schneidensätzen lediglich ein kurzer Druck- bzw. Schaltimpuls erforderlich ist, welcher erstens die in der Ausgangsposition vorhandene Verriegelung aufhebt und zweitens die Umschaltung von der einen Position in die andere Position bewirkt. Anschließend erfolgt die selbsttätige Verriegelung in der geänderten Position. Eine solche Druckschaltmechanik ist einfach im Aufbau und außerdem leicht zu betätigen. Sie kann kompakt in den Werkzeugkopf integriert werden, so dass kein zusätzlicher Bauraum erforderlich ist. Ein derartig ausgestalteter Werkzeugkopf kann beliebig in Durchlaufbearbeitungsmaschinen und auch an Frässpindeln eines Bearbeitungszentrums eingesetzt werden, wobei in allen Einsatzszenarien ein schneller und einfacher Wechsel zwischen den beiden verschiedenen Schneidensätzen möglich ist.

Für die Betätigung der Druckschaltmechanik kann es zweckmäßig sein, einen Schalthebel oder dergleichen vorzusehen, der manuell oder automatisiert betätigt wird. In einer bevorzugten Ausführungsform weist die Druckschaltmechanik mindestens eine und insbesondere mehrere über den Umfang verteilte, in axialer Richtung wirkende Betätigungsflächen auf. Hierdurch ist die Möglichkeit geschaffen, den Werkzeugkopf für den Umschaltvorgang kurz und impulsartig gegen einen feststehenden Anschlag zu verfahren. Alternativ kann der Werkzeugkopf ortsfest verbleiben, wobei dann der genannte Anschlag bzw. ein entsprechendes Betätigungselement gegen die Betätigungsfläche des Werkzeugkopfes verfahren wird. Jedenfalls findet ein gegenseitiges axiales Andrücken von Betätigungsfläche und Betätigungselement statt, wodurch dann die Umschaltung bewirkt wird. Im Falle von mehreren über den Umfang verteilten Betätigungsflächen kommt es dann auf die Drehwinkelposition des Werkzeugkopfes nicht an. Als Betätigungselement kommen ortsfeste oder relativ zum Werkzeugkopf bewegliche Taster oder dergleichen in Betracht. Im Falle eines erfindungsgemäßen Werkzeugsystems, bei der neben dem Werkzeugkopf auch eine Tastrolle zum Abfahren der Kontur des Werkstücks zum Einsatz kommt, kann diese Tastrolle vorteilhaft die Funktion als Betätigungselement übernehmen. Auch in diesem Fall besteht die Möglichkeit, für den Umschaltvorgang den Werkzeugkopf ortsfest zu halten und dann die Tastrolle axial gegen die Betätigungsfläche des Werkzeugkopfes zu verfahren. Bevorzugt wird aber der Werkzeugkopf gegenüber der Tastrolle axial verfahren. Hierbei wird die mindestens eine Betätigungsfläche kurz und impulsartig axial gegen die Tastrolle angedrückt. Anschließend kehrt der Werkzeugkopf in seine Ausgangslage relativ zur Tastrolle zurück, ohne dass eine Neuausrichtung erforderlich ist.

In vorteilhafter Weiterbildung der Erfindung steht die mindestens eine Betätigungsfläche in axialer Richtung über die ersten Schneiden und auch über die zweiten Schneiden hinaus. Alternativ oder zusätzlich kann es zweckmäßig sein, dass die mindestens eine Betätigungsfläche radial innerhalb der ersten Schneiden und der zweiten Schneiden liegt. Hierdurch ist sichergestellt, dass es keine Überschneidung der Betätigungsfläche mit den Schneiden gibt. Die Betätigungsflächen können angefahren werden, ohne dass eine Kollision mit den Schneiden zu befürchten ist.

Für die konkrete Ausgestaltung der Druckschaltmechanik kommen verschiedene Ausführungsformen in Betracht. In einer bevorzugten Ausgestaltung umfasst die Druckschaltmechanik eine axial federvorgespannte Vorschubhülse, eine von der Betätigungsfläche axial gegen die federvorgespannte Vorschubhülse verschiebbare Druckhülse und eine die Vorschubhülse und die Druckhülse außenseitig umschließende Außenhülse. Die Vorschubhülse ist in der Außenhülse drehbar gelagert und weist Rastvorsprünge mit in einer Drehrichtung wirkenden Schrägflächen auf. Auch die Druckhülse weist über den Umfang verteilte Schrägflächen auf, wobei diese Schrägflächen mit den Schrägflächen der Vorschubhülse korrespondieren. Innenseitig der Außenhülse sind in Umfangsrichtung verteilt abwechselnd erste und zweite Rastaufnahmen mit ersten und zweiten Axialanschlägen für die Rastvorsprünge der Vorschubhülse angeordnet, wobei die ersten Axialanschläge gegenüber den zweiten Axialanschlägen axial versetzt sind.

Ein auf die Betätigungsfläche wirkender Schaltimpuls wird auf die Druckhülse übertragen, so dass diese axial gegen die Vorschubhülse gedrückt wird. Die Vorschubhülse liegt zunächst in einer von zwei verriegelten Schaltpositionen mit ihren Rastvorsprüngen entweder in den ersten Rastaufnahmen oder in den zweiten Rastaufnahmen, wobei sie durch ihre axiale Federvorspannung gegen die jeweils ersten oder zweiten Axialanschläge gedrückt wird. Das Auftreffen der Druckhülse bewirkt nun zunächst, dass die Vorschubhülse so weit axial verschoben wird, dass ihre Rastvorsprünge nicht mehr in den jeweiligen Rastaufnahmen gehalten sind. Sobald dieser axiale Verschiebezustand erreicht ist, bewirkt das Wechselspiel der Schrägflächen der Druckhülse mit den Schrägflächen der Vorschubhülse, dass sich die Vorschubhülse um einen bestimmten Winkelbetrag dreht. Sobald nun der Schaltimpuls zu Ende ist und die Druckhülse in ihre Ausgangsposition zurückgekehrt ist, wird die Vorschubhülse im gedrehten Zustand aufgrund ihrer Federvorspannung aus ihrer axial angehobenen Position zurückgedrückt. Hierbei greifen dann die Rastvorsprünge wieder in korrespondierende Rastaufnahmen ein und kommen an den entsprechenden Axialanschlägen zur Anlage. Aufgrund des veränderten Drehwinkels kommen jedoch diesmal diejenigen Rastaufnahmen und Rastvorsprünge zum Einsatz, die zu den vorherigen Rastaufnahmen und Rastvorsprüngen in Umfangsrichtung benachbart liegen.

Bei einem erneuten Druckschaltimpuls wird der oben beschriebene Vorgang wiederholt. Jedes Mal dreht sich die Vorschubhülse um einen solchen Winkelbetrag weiter, welcher dem Winkelabstand zwischen zwei benachbarten Rastaufnahmen entspricht. Da in Umfangsrichtung abwechselnd erste Rastaufnahmen mit ersten Axialanschlägen und zweite Rastaufnahmen mit zweiten Axialanschlägen aufeinander folgen, liegen die Rastvorsprünge der Vorschubhülse abwechselnd an den ersten bzw. zweiten Axialanschlägen mit unterschiedlichen, axial gegeneinander versetzten Positionen an. Insgesamt wird damit die Vorschubhülse zwischen zwei verschiedenen Axialpositionen hin und her geschaltet. Außerdem liegt der zweite Werkzeugabschnitt insbesondere unter Federvorspannung an der Vorschubhülse an, so dass auch der zweite Werkzeugabschnitt zwischen den beiden genannten Axialpositionen hin und her geschaltet wird. Diese beiden Axialpositionen entsprechen der eingangs erwähnten aktiven bzw. passiven Position, so dass nach Wahl entweder der Satz von ersten Schneiden oder der Satz von zweiten Schneiden zum Einsatz kommt.

Die vorstehend beschriebene Ausführungsform der Druckschaltmechanik ist insgesamt koaxial aufgebaut. Die für die axiale Positionierung und Verriegelung zuständigen Rastvorsprünge, Rastaufnahmen und Axialanschläge sind gleichmäßig über den Umfang verteilt. Insgesamt ergibt sich hieraus eine konzentrische, über einen großen Umfang wirkende Kraftverteilung, so dass die Mechanik bei vergleichsweise kleinem Bauvolumen einerseits hoch belastbar und andererseits mit geringen Schaltkräften leicht betätigbar ist.

In bevorzugter Weiterbildung sind die ersten und die zweiten Axialanschläge korrespondierend zu den Schrägflächen der Rastvorsprünge der Vorschubhülse schräg geneigt. Es treffen also die Schrägflächen der Rastvorsprünge mit den schräg geneigten Axialanschlägen aufeinander, was eine Vorspannung der Vorschubhülse in Drehrichtung auch dann bewirkt, wenn sie in einer ihrer zwei Schaltpositionen verrastet ist. Hierdurch ist sichergestellt, dass sie einerseits ihre vorgesehene Rastposition sicher und präzise einnimmt und andererseits dort auch bis zum Einwirken des nächsten Schaltimpulses zuverlässig verbleibt.

Für die Positionierung der vorstehend beschriebenen Druckschaltmechanik kommen verschiedene Orte in Betracht. Es hat sich als zweckmäßig herausgestellt, wenn die Außenhülse der Druckschaltmechanik durch die Umfangswand des ersten Werkzeugabschnitts gebildet ist. Hierdurch wird der zur Verfügung stehende Bauraum maximal ausgenutzt. Aufgrund des größtmöglichen Durchmessers der Umfangwand des ersten Werkzeugabschnitts kann eine sehr hohe mechanische Belastbarkeit erzielt werden.

Ein Ausführungsbeispiel der Erfindung ist nachfolgend anhand der Zeichnung näher beschrieben. Es zeigen:
- Fig. 1: in einer perspektivischen Ansicht einen erfindungsgemäß ausgeführten Werkzeugkopf mit zwei axial gegeneinander verschiebbaren Werkzeugteilen,
- Fig. 2: in einer Explosionsdarstellung den Werkzeugkopf nach Fig. 1 mit Einzelheiten zu seiner innenliegenden Druckschaltmechanik,
- Fig. 3: in einer Längsschnittdarstellung den Werkzeugkopf nach den Fig. 1 und 2 im Zusammenspiel mit einer Tastrolle, wobei der zweite Werkzeugabschnitt in einer passiven Position verrastet ist, und
- Fig. 4: die Anordnung nach Fig. 3 mit dem zweiten Werkzeugabschnitt in der aktiven Position.

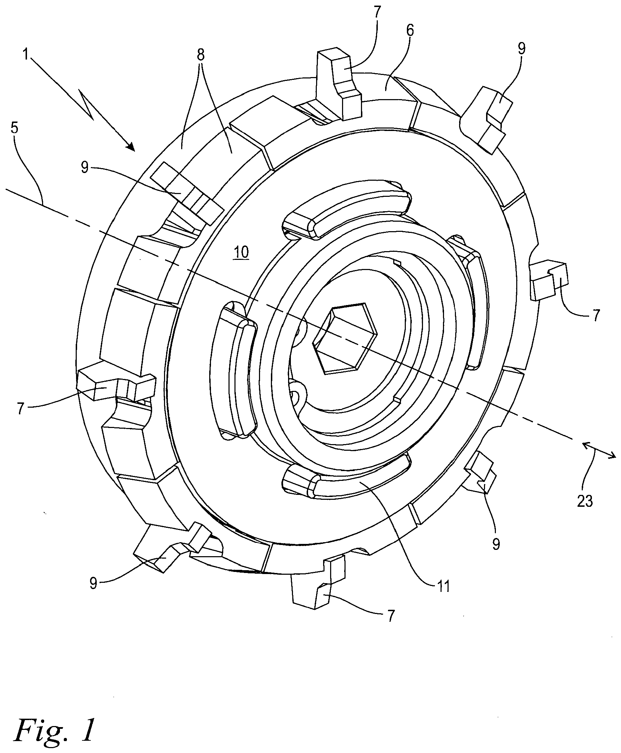

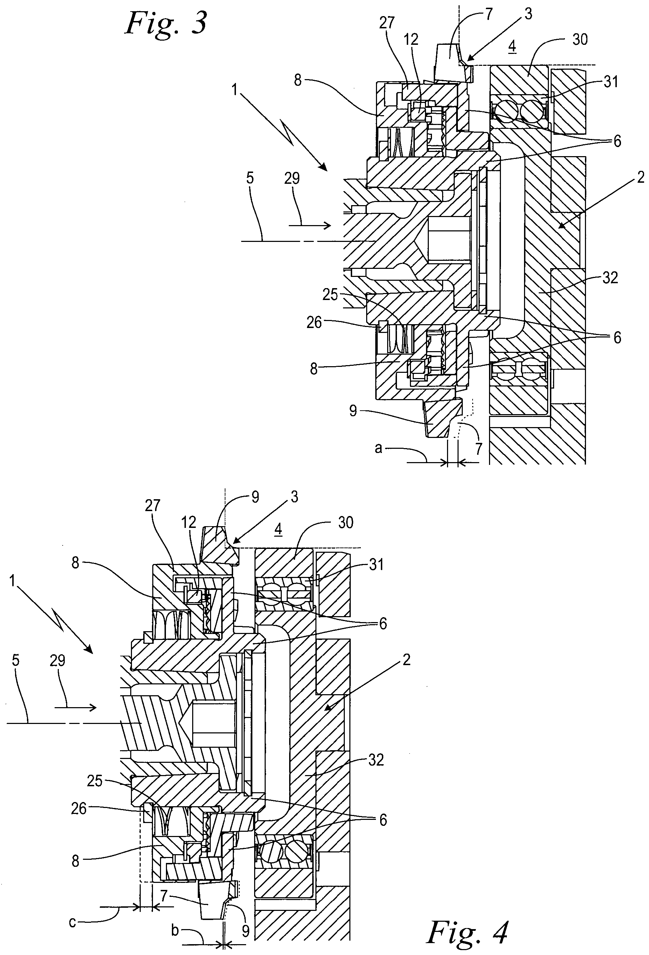

Fig. 1 zeigt in einer perspektivischen Ansicht ein Ausführungsbeispiel eines erfindungsgemäßen Werkzeugkopfes 1 zum Bearbeiten von in den Fig. 3 und 4 dargestellten Kanten 3 eines Werkstückes 4. Bevorzugt geht es dabei um plattenförmige Werkstücke 4, insbesondere solche aus Holz, holzähnlichen Werkstoffen oder Kunststoffen einschließlich Span- und Faserplatten, deren Umfangsflächen mit Materialstreifen ummantelt sind. Es können aber auch Kanten 3 von massiven Werkstücken 4 ohne Beschichtung oder Ummantelung bearbeitet werden.

Der Werkzeugkopf 1 ist im Wesentlichen als Rotationskörper ausgestaltet. Er erstreckt sich entlang einer Längsachse 5 und ist zum drehenden Antrieb um diese Längsachse 5 herum ausgelegt. Die Längsachse 5 wirkt also auch als Drehachse. Der Werkzeugkopf 1 weist um seinen Umfang verteilt erste und zweite Schneiden 7, 9 auf, mit denen ein Formfräsen der Kante 3 des Werkstücks 4 (Fig. 3, 4) vorgenommen wird.

Der erfindungsgemäße Werkzeugkopf 1 umfasst einen ersten Werkzeugabschnitt 6 und einen zweiten Werkzeugabschnitt 8, wobei der zweite Werkzeugabschnitt 8 relativ zum ersten Werkzeugabschnitt 6 entsprechend einem Doppelpfeil 23 in axialer Richtung, also achsparallel zur Längsachse 5 hin und her verschoben werden kann. Der erste Werkzeugabschnitt 6 weist einen Satz von mehreren, hier beispielhaft vier über den Umfang verteilte erste Schneiden 7 auf. Der zweite Werkzeugabschnitt 8 weist ebenfalls einen Satz von mehreren und hier beispielhaft insgesamt vier über den Umfang verteilte zweite Schneiden 9 auf. Im gezeigten bevorzugten Ausführungsbeispiel ist die Anzahl der zweiten Schneiden 9 gleich der Anzahl der ersten Schneiden 7. Die Anzahl kann aber auch abweichend sein und dabei insbesondere ein ganzzahliges Vielfaches oder einen ganzzahligen Teiler davon betragen. Jedenfalls sind die zweiten Schneiden 9 in Umfangsrichtung gesehen zwischen den ersten Schneiden 7 positioniert, so dass hier im Umfangsrichtung abwechselnd auf jede erste Schneide 7 je eine zweite Schneide 9 und umgekehrt folgt. Aus der oben schon erwähnten axialen Verstellbarkeit des zweiten Werkzeugabschnitts 8 gegenüber dem ersten Werkzeugabschnitt 6 folgt, dass auch die zugehörigen zweiten Schneiden 9 in gleicher Weise axial relativ zu den ersten Schneiden 7 des ersten Werkzeugabschnittes 6 verstellt werden.

Für die Relativverstellung des zweiten Werkzeugabschnitts 8 gegenüber dem ersten Werkzeugabschnitt 6 und für die Verriegelung in der jeweils eingenommenen Position umfasst der Werkzeugkopf 1 eine weiter unten näher beschriebene Druckschaltmechanik, welche mindestens eine in axialer Richtung wirkenden Betätigungsfläche 11 aufweist. Im gezeigten bevorzugten Ausführungsbeispiel umfasst die Druckschaltmechanik 10 mehrere, hier beispielhaft vier über den Umfang verteilte Betätigungsflächen 11. Hierzu weist die freie Stirnfläche des Werkzeugkopfes 1 eine korrespondierende Anzahl von Öffnungen auf, durch die fingerartige Vorsprünge mit stirnseitigen Betätigungsflächen 11 hindurchgeführt sind und axial gegenüber der Stirnfläche des Werkzeuggrundkörpers hervorstehen. Dabei ist der perspektivischen Darstellung nach Fig. 1 noch entnehmbar, dass die Betätigungsflächen 11 einerseits in der axialen Richtung über die ersten Schneiden 7 und auch über die zweiten Schneiden 9 hinausstehen, als auch bezogen auf die senkrecht zur Längsachse 5 stehenden Radialrichtung innerhalb der ersten Schneiden 7 und innerhalb der zweiten Schneiden 9 liegen. Bevorzugt gilt dies für sämtliche axiale Verstellpositionen des zweiten Werkzeugabschnitts 8 mit seinem zugehörigen Satz von zweiten Schneiden 9.

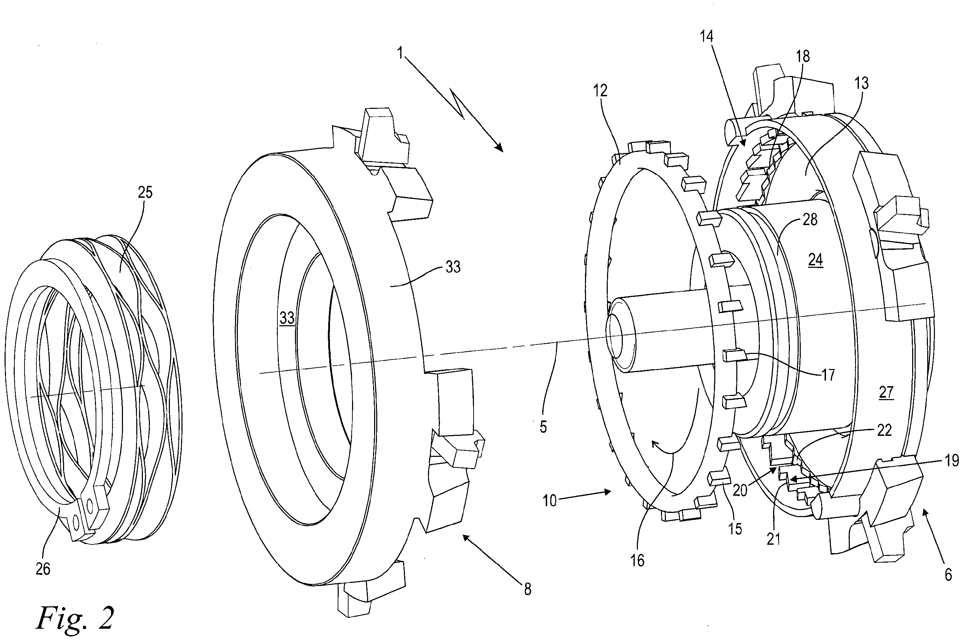

Fig. 2 zeigt in einer perspektivischen Explosionsdarstellung die wesentlichen Einzelteile des Werkzeugkopfes 1 nach Fig. 1 mit seiner Druckschaltmechanik 10. Die Druckschaltmechanik 10 umfasst eine Vorschubhülse 12, eine Druckhülse 13 und eine Außenhülse 14. Die Außenhülse 14 ist in der gezeigten bevorzugten Ausführungsform durch eine äußerste Umfangswand 27 des ersten Werkzeugabschnitts 6 gebildet. Sie kann aber auch eine separate Hülse im weiter innen liegenden Nabenbereich sein. Jedenfalls umschließt die Außenhülse 14 im montierten Zustand sowohl die Vorschubhülse 12 als auch die Druckhülse 13.

Der erste Werkzeugabschnitt 6 ist mit einer radial inneren Nabe 24 versehen, mittels derer er fest auf der nicht dargestellten Werkzeugspindel einer Antriebseinheit montiert werden kann. Der Grundkörper des zweiten Werkzeugabschnitts 8 weist eine zur Nabe 24 korrespondierende mittige Öffnung auf, mittels derer der zweite Werkzeugabschnitt 8 auf der Nabe 24 des ersten Werkzeugabschnitts 6 axial, also parallel zur Längsachse 5 hin und her verschiebbar gelagert ist. Im Zusammenhang mit den Fig. 3 und 4 ist noch erkennbar, dass eine radial äußere Umfangswand 33 des zweiten Werkzeugabschnitts 8 die Umfangswand 27 des ersten Werkzeugabschnitts 6 im Bereich der Vorschubhülse 12, der Druckhülse 13 und der Außenhülse 14 zumindest teilweise umschließt. Ein Federpaket 25 ist auf die Nabe 24 aufgefädelt und liegt in axialer Richtung an einer Stirnfläche 33 des zweiten Werkzeugabschnittes 8 an. An ihrem Ende weist die Nabe 24 eine umlaufende Nut 28 auf, in die ein Sicherungsring 26 derart eingesetzt ist, dass das zwischen dem Sicherungsring 26 und dem zweiten Werkzeugabschnitt 8 eingesetzte Federpaket 25 unter axialer Druckvorspannung steht. Der zweite Werkzeugabschnitt 8 wird dadurch unter Einwirkung des vorgespannten Federpakets 25 in Fig. 2 nach rechts, also in Richtung des freien Endes des Werkzeugkopfes 1 bzw. zur Druckhülse 13 unter Zwischenlage der Vorschubhülse 12 vorgespannt. Mit anderen Worten drückt das Federpaket 25 gegen den zweiten Werkzeugabschnitt 8, welcher diese Druckvorspannung an die angrenzende Vorschubhülse 12 weitergibt. Von dort überträgt sich die Druckvorspannung in weiter unten näher beschriebener Weise entweder auf die Außenhülse 14 oder auf die Druckhülse 13.

Die Druckhülse 13 ist mittels der weiter oben näher beschriebenen mindestens einen Betätigungsfläche 11 axial gegen die in vorstehend beschriebener Weise federvorgespannte Vorschubhülse 12 axial verschiebbar. Bei einer tastenden Eindrückbewegung der mindestens einen Betätigungsfläche 11 (Fig. 1) wird also zunächst die Druckhülse 13 in Anlage an die Vorschubhülse 12 gebracht. Bei einer weitergehenden Eindrückbewegung werden die Druckhülse 13 und die Vorschubhülse 12 und auch der zweite Werkzeugabschnitt 8 gemeinsam gegen die Vorspannkraft des Federpaketes 25 eingedrückt.

Die Vorschubhülse 12 kann zwei verschiedene Rastpositionen einnehmen. Dazu ist sie in der Außenhülse 14 drehbar gelagert. Die Vorschubhülse 12 weist radial nach außen und auch axial zur Druckhülse 13 hin hervorstehende Rastvorsprünge 15 auf, mit denen sie sich in der Radialrichtung gegen die Innenwand der Außenhülse 14 abstützt. An ihren der Druckhülse 13 zugewandten Stirnseiten sind die Rastvorsprünge 15 jeweils mit in Umfangsrichtung einseitig geneigten und daher in einer Drehrichtung 16 wirkenden Schrägflächen 17 versehen. Die Druckhülse 13 weist ihrerseits über den Umfang verteilte Schrägflächen 18 auf, die mit den Schrägflächen 17 der Vorschubhülse 12 korrespondieren.

Innenseitig der Außenhülse 14 sind in Umfangsrichtung verteilt abwechselnd erste und zweite Rastaufnahmen 19, 20 mit ersten und zweiten Axialanschlägen 21, 22 angeordnet. In unterschiedlichen Drehwinkelstellungen der Vorschubhülse 12 liegt diese mit ihren Rastvorsprüngen 15 entweder in den ersten Rastaufnahmen 19 oder in den zweiten Rastaufnahmen 20. Aufgrund der oben beschriebenen axialen Federdruckvorspannung ist die Vorschubhülse 12 in beiden Fällen mit ihren Rastvorsprüngen 15 so weit in die jeweiligen ersten Rastaufnahmen 19 oder zweiten Rastaufnahmen 20 hineingedrückt, dass die Rastvorsprünge 15 mit ihren stirnseitigen Schrägflächen 17 an den im Grund der ersten bzw. zweiten Rastaufnahmen 19, 20 befindlichen ersten oder zweiten Axialanschlägen 21, 22 anliegen. Die zweiten Axialanschläge 22 liegen tiefer in den zweiten Rastaufnahmen 20 als die ersten Axialanschläge 21 in den ersten Rastaufnahmen 19, sind also gegenüber diesen axial in Richtung des rechts im Bild befindlichen freien Endes des Werkzeugkopfes 1 versetzt. Je nachdem, ob die Rastvorsprünge 15 an den ersten Axialanschlägen 21 oder an den zweiten Axialanschlägen 22 anliegen, befindet sich die Vorschubhülse 12 in einer von zwei möglichen Axialpositionen. Da der zweite Werkzeugabschnitt 8 unter der oben beschriebenen Federvorspannung an der Vorschubhülse 12 anliegt, gilt Gleiches auch für dessen Axialposition. Der zweite Werkzeugabschnitt 8 kann abhängig von der Drehwinkellage der Vorschubhülse 12 nach Wahl eine von zwei möglichen Axialpositionen einnehmen.

In beiden Fällen sind die Rastvorsprünge 15 in Umfangsrichtung durch die jeweiligen ersten oder zweiten Rastaufnahmen 19, 20 gehalten. Dies wird noch dadurch unterstützt, dass die ersten und zweiten Axialanschläge 21, 22 korrespondierend zu den Schrägflächen 17 der Rastvorsprünge 15 schräg geneigt sind. Die jeweiligen Schrägflächen gleiten unter der axialen Vorspannung aufeinander ab, in dessen Folge die Rastvorsprünge 15 in Umfangsrichtung gegen Seitenwände der ersten bzw. zweiten Rastaufnahmen 19, 20 gedrückt und dort gehalten werden. Dies führt zu einer Verriegelung der Vorschubhülse 12 und damit einer verriegelnden Positionierung des zweiten Werkzeugabschnitts 8 in seiner jeweils gewählten Axialposition.

Für die Umschaltung zwischen den beiden genannten Axialpositionen kommt die eingangs schon erwähnte Druckhülse 13 mit ihren Betätigungsflächen 11 zum Einsatz. Ein kurzer Druckimpuls auf die mindestens eine Betätigungsfläche 11 (Fig. 1) bewirkt ein axiales Eindrücken der Druckhülse 13 und auch der Vorschubhülse 12 so weit, dass die Rastvorsprünge 15 nicht mehr im Eingriff mit ihren jeweiligen ersten oder zweiten Rastaufnahmen 19, 20 stehen. Im so weit eingedrückten Zustand kann sich die Vorschubhülse 12 verdrehen. Da außerdem die axiale Druckübertragung zwischen der Druckhülse 13 und der Vorschubhülse 12 über die korrespondierenden Schrägflächen 18, 17 erfolgt, findet hier eine gleitende Relativbewegung in Umfangsrichtung statt, demnach die Vorschubhülse 12 gegenüber der in Drehrichtung feststehenden Druckhülse eine Drehung in der Drehrichtung 16 erfährt. Die in Umfangsrichtung wirksame Erstreckung der Schrägflächen 18, 17 ist so bemessen, dass die aufgezwungene Drehung der Vorschubhülse 12 in ihrem Betrag dem Winkelabstand zweiter benachbarter erster bzw. zweiter Rastaufnahmen 19, 20 entspricht.

Nach dem Ende des von der Druckhülse 13 aufgebrachten Druckimpulses wird das Paket bestehend aus dem zweiten Werkzeugabschnitt 2, der Vorschubhülse 12 und der Druckhülse 13 wieder aufgrund der genannten Federvorspannung axial zurückgedrückt. Gegenüber der Ausgangslage ist jedoch die Vorschubhülse 12 so weit verdreht, dass ihre Rastvorsprünge 15 nicht mehr in die gleichen, sondern in die in Umfangsrichtung benachbarten Rastaufnahmen gelangen. Ausgehend von den ersten Rastaufnahmen 19 gelangen sie nun in die zweiten Rastaufnahmen 20, während sie ausgehend von den zweiten Rastaufnahmen 20 nun in die ersten Rastaufnahmen 19 gelangen. Jeder einzelne, auf die Betätigungsfläche 11 (Fig. 1) und die Druckhülse 13 ausgeübte Druckimpuls führt also zu einem Umschalten zwischen den beiden oben beschriebenen Axialpositionen der Vorschubhülse 12 und damit des zweiten Werkzeugabschnitts 8.

Die Fig. 3 und 4 zeigen noch in Längsschnittdarstellung den Werkzeugkopf 1 nach den Fig. 1 und 2 in seinen beiden verschiedenen Schaltpositionen, wobei die Schnittführung der Darstellung derart gewählt ist, dass auf einer Seite der Längsachse 5 der Bereich mit einer ersten Schneide 7 und auf der anderen Seite der Längsachse 5 der Bereich mit einer zweiten Schneide 9 gezeigt ist. Der Werkzeugkopf 1 bildet zusammen mit einem Betätigungselement für dessen Druckschaltmechanik ein erfindungsgemäßes Werkzeugsystem. Das Betätigungselement kann ein Anschlag oder Taster sein und wird im gezeigten bevorzugten Ausführungsbeispiel durch eine Tastrolle 2 gebildet. Die Tastrolle 2 ist ihrerseits durch eine Rollennabe 32, ein Lager 31 und einen umfangsseitigen Rollenkörper 30 gebildet, wobei der Rollenkörper 30 mittels des Lagers 31 um die Nabe 32 umlaufen kann. Der Werkzeugkopf 1 und die Tastrolle 2 sind koaxial zur Längsachse 5 positioniert. Das gesamte Werkzeugsystem wird so weit gegen das schematisch angedeutete Werkstück 4 verfahren, dass die Tastrolle 2 mit dem Umfang ihres Rollenkörpers 30 auf der Oberfläche des Werkstückes 4 aufliegt. In dieser Position kann die Oberfläche des Werkstückes 4 beispielsweise beim Einsatz in einem Bearbeitungszentrum abgefahren werden. Umgekehrt ist natürlich auch ein feststehendes Werkzeugsystem möglich, bei dem das Werkstück 4 im Sinne einer Durchlaufbearbeitungsmaschine feststeht, wobei dann das Werkstück 4 entlang des Werkzeugkopfes 1 geführt wird. In jedem Falle findet eine Ausrichtung des Werkzeugkopfes 1 relativ zur Kante 3 des Werkstücks 4 derart statt, dass die Kante 4 nach Wahl entweder durch den Satz von ersten Schneiden 7 oder durch den Satz von zweiten Schneiden 9 des Werkzeugkopfes 1 bearbeitet wird.

In der Längsschnittdarstellung nach Fig. 3 ist derjenige Schaltzustand des Werkzeugkopfes 1 gezeigt, bei dem sich die Rastvorsprünge 15 in den ersten Rastaufnahmen 19 (Fig. 2) befinden. Die entsprechende Axialposition entspricht einer passiven Position des zweiten Werkzeugabschnitts 8. Hierbei sind die zweiten Schneiden 9 gegenüber den ersten Schneiden 7 um ein erstes axiales Differenzmaß a axial zurückgezogen, so dass nur die ersten Schneiden 7 in Kontakt mit der Kante 3 des Werkstücks 4 geraten und eine entsprechende Kantenbearbeitung vornehmen.

Für eine Umschaltung kann nun der Werkzeugkopf 1 axial zum ortsfesten Betätigungselement bzw. zur ortsfest gehaltenen Tastrolle 2 hin in einer kurzen Schaltbewegung entsprechend einem Pfeil 29 axial so weit verfahren werden, dass die mindestens eine Betätigungsfläche 11 kurzzeitig an der Tastrolle 2 zur Anlage kommt und in oben beschriebener Weise eingedrückt wird. Anschließend wird der Werkzeugkopf 1 wieder in seine Ausgangslage relativ zur Tastrolle 2 axial zurückverfahren. Alternativ kann für den Umschaltvorgang auch der Werkzeugkopf ortsfest gehalten werden, wobei dann das Betätigungselement bzw. die Tastrolle 2 in einer kurzen Schaltbewegung entgegen dem Pfeil 29 axial so weit verfahren werden, dass die mindestens eine Betätigungsfläche 11 eingedrückt wird. Jedenfalls ist nun die Position des zweiten Werkzeugabschnitts 8 in oben beschriebener Weise derart umgeschaltet, dass sich die Rastvorsprünge 15 in den zweiten Rastaufnahmen 20 (Fig. 2) befinden. Dementsprechend hat der zweite Werkzeugabschnitt 8 nach Fig. 4 seine zweite, hier aktive Position eingenommen, bei der er gegenüber der weiter oben beschriebenen passiven Position (Fig. 3) um einen axialen Verstellweg c zum freien Stirnende des Werkzeugkopfes 1 hin verschoben ist, und bei der die zweiten Schneiden 9 zwischen den ersten Schneiden 7 hindurch gegenüber den ersten Schneiden 7 in Richtung des Pfeiles 29 um ein zweites axiales Differenzmaß b axial hervorstehen. Hierbei kommen nun die zweiten Schneiden 9 bei der Bearbeitung der Kante 3 zum Einsatz, während die ersten Schneiden 7 weiter zurück liegen und außer Betrieb sind. Dieser Zustand ist in der Längsschnittdarstellung nach Fig. 4 dargestellt. Ein erneutes impulsartiges Andrücken gegen die Tastrolle 2 führt zu einem Zurückschalten in die passive Position nach Fig. 3, so dass in analoger Weise zwischen beiden Positionen hin und her geschaltet werden kann.

## Patentansprüche

1. Werkzeugkopf (1) zum Bearbeiten von Kanten (3) eines Werkstückes (4), der sich entlang einer Längsachse (5) erstreckt und zum drehenden Antrieb um die Längsachse (5) ausgelegt ist, umfassend einen ersten Werkzeugabschnitt (6) mit einem Satz von über den Umfang verteilten ersten Schneiden (7) und einen zweiten Werkzeugabschnitt (8) mit einem Satz von über den Umfang verteilten zweiten Schneiden (9), wobei die zweiten Schneiden (9) in Umfangsrichtung gesehen zwischen den ersten Schneiden (7) positioniert sind, wobei der zweite Werkzeugabschnitt (8) relativ zum ersten Werkzeugabschnitt (6) in Richtung der Längsachse (5) zwischen einer passiven Position und einer aktiven Position hin und her verfahrbar ist, wobei die zweiten Schneiden (9) in der passiven Position gegenüber den ersten Schneiden (7) axial zurückgezogen sind, und wobei die zweiten Schneiden (9) in der aktiven Position zwischen den ersten Schneiden (7) hindurch axial hervorstehen,
wobei der Werkzeugkopf (1) eine Druckschaltmechanik (10) zum hin und her Verfahren des zweiten Werkzeugabschnittes (8) zwischen der passiven Position und der aktiven Position aufweist, **dadurch gekennzeichnet, dass** die Druckschaltmechanik (10) eine solche Mechanik ist, die infolge eines ersten Druckimpulses einen ersten Schaltzustand und infolge eines weiteren Druckimpulses einen zweiten Schaltzustand einnimmt, und wobei mit jedem weiteren Druckimpuls abwechselnd zwischen den beiden Schaltzuständen bzw. Schaltpositionen hin und her geschaltet wird.

2. Werkzeugkopf nach Anspruch 1,
**dadurch gekennzeichnet, dass** die Druckschaltmechanik (10) mindestens eine und insbesondere mehrere über den Umfang verteilte, in axialer Richtung parallel zur Längsachse (5) wirkende Betätigungsflächen (11) aufweist.

3. Werkzeugkopf nach Anspruch 2,
**dadurch gekennzeichnet, dass** die mindestens eine Betätigungsfläche (11) in axialer Richtung über die ersten Schneiden (7) und die zweiten Schneiden (9) hinaussteht.

4. Werkzeugkopf nach Anspruch 2 oder 3,
**dadurch gekennzeichnet, dass** die mindestens eine Betätigungsfläche (11) radial innerhalb der ersten Schneiden (7) und der zweiten Schneiden (9) liegt.

5. Werkzeugkopf nach einem der Ansprüche 2 bis 4,
**dadurch gekennzeichnet, dass** die Druckschaltmechanik (10) eine axial federvorgespannte Vorschubhülse (12), eine von der Betätigungsfläche (11) axial gegen die federvorgespannte Vorschubhülse (12) verschiebbare Druckhülse (13) und eine die Vorschubhülse (12) und die Druckhülse (13) umschließende Außenhülse (14) umfasst, wobei die Vorschubhülse (12) in der Außenhülse (14) drehbar gelagert ist und Rastvorsprünge (15) mit in einer Drehrichtung (16) wirkenden Schrägflächen (17) aufweist, wobei die Druckhülse (13) über den Umfang verteilte Schrägflächen (18) aufweist, die mit den Schrägflächen (17) der Vorschubhülse (12) korrespondieren, wobei innenseitig der Außenhülse (14) in Umfangsrichtung verteilt abwechselnd erste und zweite Rastaufnahmen (19, 20) mit ersten und zweiten Axialanschlägen (21, 22) für die Rastvorsprünge (15) der Vorschubhülse (12) angeordnet sind, wobei die ersten Axialanschläge (21) gegenüber den zweiten Axialanschlägen (22) axial versetzt sind.

6. Werkzeugkopf nach Anspruch 5,
**dadurch gekennzeichnet, dass** die ersten und zweiten Axialanschläge (21, 22) korrespondierend zu den Schrägflächen (17) der Rastvorsprünge (15) der Vorschubhülse (12) schräg geneigt sind.

7. Werkzeugkopf nach Anspruch 5 oder 6,
**dadurch gekennzeichnet, dass** die Außenhülse (14) der Druckschaltmechanik (10) durch eine Umfangswand (27) des ersten Werkzeugabschnitts (6) gebildet ist.

8. Werkzeugsystem mit einem Werkzeugkopf (1) nach einem der Ansprüche 2 bis 7 und mit einem Betätigungselement, wobei der Werkzeugkopf (1) und das Betätigungselement relativ zueinander axial verfahrbar sind, und wobei die mindestens eine Betätigungsfläche (11) und das Betätigungselement zum gegenseitigen axialen Andrücken ausgelegt sind.

9. Werkzeugsystem nach Anspruch 8,
**dadurch gekennzeichnet, dass** der Werkzeugkopf (1) gegenüber dem ortsfesten Betätigungselement axial verfahrbar ist, und wobei die mindestens eine Betätigungsfläche (11) zum axialen Andrücken gegen das Betätigungselement ausgelegt ist.

10. Werkzeugsystem nach Anspruch 8 oder 9,
**dadurch gekennzeichnet, dass** das Betätigungselement eine Tastrolle (2) zum Abfahren der Kontur des Werkstückes (4) ist.

## Claims

1. Tool head (1) for machining edges (3) of a workpiece (4), the tool head (1) extending along a longitudinal axis (5) and being designed for rotary drive about the longitudinal axis (5), comprising a first tool section (6) with a set of first cutting edges (7) distributed along the circumference and a second tool section (8) with a set of second cutting edges (9) distributed along the circumference, wherein the second cutting edges (9) are positioned between the first cutting edges (7) as viewed in the circumferential direction,
wherein the second tool section (8) is movable to and fro relative to the first tool section (6) in the direction of the longitudinal axis (5) between a passive position and an active position,
wherein the second cutting edges (9) are axially retracted with respect to the first cutting edges (7) in the passive position, and
wherein the second cutting edges (9) axially project between the first cutting edges (7) in the active position,
wherein the tool head (1) has a pressure switching mechanism (10) for moving the second tool section (8) to and fro between the passive position and the active position,
**characterised in that** the pressure switching mechanism (10) is a mechanism designed such that it adopts a first switching state in response to a first pressure pulse and a second switching state in response to a further pressure pulse, wherein the mechanism alternately switches between the two switching states or switching positions at each further pressure pulse.

2. Tool head according to claim 1,
**characterised in that** the pressure switching mechanism (10) has at least one actuating surface (11) and in particular several actuating surfaces (11) distributed along the circumference and acting in the axial direction parallel to the longitudinal axis (5).

3. Tool head according to claim 2,
**characterised in that** the at least one actuating surface (11) projects beyond the first cutting edges (7) and the second cutting edges (9) in the axial direction.

4. Tool head according to claim 2 or 3,
**characterised in that** the at least one actuating surface (11) lies radially within the first cutting edges (7) and the second cutting edges (9).

5. Tool head according to any of claims 2 to 4,
**characterised in that** the pressure switching mechanism (10) comprises an axially spring-preloaded feed sleeve (12), a pressure sleeve (13) which is axially displaceable against the spring-preloaded feed sleeve (12) by the actuating surface (11) and an outer sleeve (14) enclosing the feed sleeve (12) and the pressure sleeve (13), wherein the feed sleeve (12) is rotatably mounted in the outer sleeve (14) and has latching projections (15) with bevels (17) acting in a direction of rotation (16), wherein the pressure sleeve (13) has bevels (18) distributed along the circumference and corresponding to the bevels (17) of the feed sleeve (12), wherein first and second latching receptacles (19, 20) with first and second axial stops (21, 22) for the latching projections (15) of the feed sleeve (12) are alternately distributed in the circumferential direction inside the outer sleeve (14), the first axial stops (21) being axially offset relative to the second axial stops (22).

6. Tool head according to claim 5,
**characterised in that** the first and second axial stops (21, 22) are inclined to correspond to the bevels (17) of the latching projections (15) of the feed sleeve (12).

7. Tool head according to claim 5 or 6,
**characterised in that** the outer sleeve (14) of the pressure switching mechanism (10) is represented by a circumferential wall (27) of the first tool section (6).

8. Tool system with a tool head (1) according to any of claims 2 to 7 and with an actuating element, wherein the tool head (1) and the actuating element are axially movable relative to each other and wherein at least one actuating surface (11) and the actuating element are designed for mutual axial pressing against each other.

9. Tool system according to claim 8,
**characterised in that** the tool head (1) is axially movable with respect to the stationary actuating element, wherein the at least one actuating surface (11) is designed for axially pressing against the actuating element.

10. Tool system according to claim 8 or 9,
**characterised in that** the actuating element is a follower roll (2) for tracing the contour of the workpiece (4).

## Revendications

1. Tête d'outil (1) pour l'usinage d'arêtes (3) d'une pièce (4), qui s'étend le long d'un axe longitudinal (5) et est conçue pour l'entraînement rotatif autour de l'axe longitudinal (5), comprenant une première section d'outil (6) avec un ensemble de premiers couteaux (7) répartis sur la circonférence, et une deuxième section d'outil (8) avec un ensemble de deuxièmes couteaux (9) répartis sur la circonférence, dans laquelle les deuxièmes couteaux (9) vus dans le sens circonférentiel sont positionnés entre les premiers couteaux (7), dans laquelle la deuxième section d'outil (8) est mobile avec un mouvement de va-et-vient par rapport à la première section d'outil (6) dans la direction de l'axe longitudinal (5) entre une position passive et une position active, dans laquelle les deuxièmes couteaux (9), dans la position passive, sont en retrait axialement par rapport aux premiers couteaux (7), et dans laquelle les deuxièmes couteaux (9), dans la position active, dépassent axialement entre et à travers les premiers couteaux (7), dans laquelle la tête d'outil (1) comporte un mécanisme de commutation à pression (10) pour le mouvement de va-et-vient de la deuxième section d'outil (8) entre la position passive et la position active,
**caractérisée en ce que** le mécanisme de commutation à pression (10) est un mécanisme qui adopte à la suite d'une première impulsion de pression un premier état de commutation, et à la suite d'une autre impulsion de pression un deuxième état de commutation, et dans laquelle avec chaque autre impulsion de pression une commutation se fait alternativement entre les deux états de commutation ou positions de commutation avec un mouvement de va-et-vient.

2. Tête d'outil selon la revendication 1,
**caractérisée en ce que** le mécanisme de commutation à pression (10) comporte au moins une et en particulier plusieurs surfaces d'actionnement (11) réparties sur la circonférence et agissant dans la direction axiale parallèlement à l'axe longitudinal (5).

3. Tête d'outil selon la revendication 2,
**caractérisée en ce que** la au moins une surface d'actionnement (11) déborde dans la direction axiale sur les premiers couteaux (7) et les deuxièmes couteaux (9).

4. Tête d'outil selon la revendication 2 ou 3,
**caractérisée en ce que** la au moins une surface d'actionnement (11) est située radialement à l'intérieur des premiers couteaux (7) et des deuxièmes couteaux (9).

5. Tête d'outil selon l'une des revendications 2 à 4,
**caractérisée en ce que** le mécanisme de commutation à pression (10) comprend un manchon d'avance (12) contraint par ressort axialement, un manchon de pression (13) apte à être déplacé axialement par la surface d'actionnement (11) vers le manchon d'avance (12) contraint par ressort et un manchon extérieur (14) entourant le manchon d'avance (12) et le manchon de pression (13), dans laquelle le manchon d'avance (12) est monté à rotation dans le manchon extérieur (14) et comporte des saillies d'encliquetage (15) avec des surfaces en biais (17) agissant dans une direction de rotation (16), dans laquelle le manchon de pression (13) comporte des surfaces en biais (18) réparties sur la circonférence, qui correspondent aux surfaces en biais (17) du manchon d'avance (12), dans laquelle sur le côté intérieur du manchon extérieur (14) sont disposés, répartis en alternance dans la direction circonférentielle, de premiers et deuxièmes creux d'encliquetage (19, 20) avec de première et deuxième butées axiales (21, 22) pour les saillies d'encliquetage (15) du manchon d'avance (12), dans laquelle les premières butées axiales (21) sont décalées axialement par rapport aux deuxièmes butées axiales (22).

6. Tête d'outil selon la revendication 5,
**caractérisée en ce que** les premières et deuxièmes butées axiales (21, 22) sont inclinées en biais d'une manière correspondant aux surfaces en biais (17) des saillies d'encliquetage (15) du manchon d'avance (12).

7. Tête d'outil selon la revendication 5 ou 6,
**caractérisée en ce que** le manchon extérieur (14) du mécanisme de commutation à pression (10) est formé par une paroi circonférentielle (27) de la première section d'outil (6).

8. Système d'outil avec une tête d'outil (1) selon l'une des revendications 2 à 7 et avec un élément d'actionnement, dans lequel la tête d'outil (1) et l'élément d'actionnement sont mobiles axialement l'un par rapport à l'autre, et dans lequel la au moins une surface d'actionnement (11) et l'élément d'actionnement sont conçus pour une pression axiale mutuelle.

9. Système d'outil selon la revendication 8,
**caractérisé en ce que** la tête d'outil (1) est mobile axialement par rapport à l'élément d'actionnement fixe, et dans lequel la au moins une surface d'actionnement (11) est conçue pour une pression axiale contre l'élément d'actionnement.

10. Système d'outil selon la revendication 8 ou 9,
**caractérisé en ce que** l'élément d'actionnement est un galet palpeur (2) pour balayer le contour de la pièce (4).
